# EUROPÄISCHE PATENTANMELDUNG

(11) **EP 0 751 612 A2**
(43) Veröffentlichungstag der Anmeldung: **02.01.1997**
(21) Anmeldenummer: 96810351.5
(22) Anmeldetag: 31.05.1996
(51) Int. Cl.: H02M 7/519

(54) **Stromrichterschaltungsanordnung**

(30) Priorität: 26.06.1995 DE 19523095
(71) Anmelder: ABB Management AG, 5401 Baden (CH)
(72) Erfinder: Grüning, Horst, Dr., 5400 Wettingen (CH)

(57) **Zusammenfassung**

Es wird eine Stromrichterschaltungsanordnung angegeben, bei welcher die abschaltbaren Thyristoren hart angesteu- ert werden. Die Beschaltung der Thyristoren zeichnet sich durch eine geringe Anzahl von Elementen aus.

## Beschreibung

### Technisches Gebiet

Die Erfindung bezieht sich auf das Gebiet der Leistungselektronik. Sie geht aus von einer Stromrichterschaltungsanordnung nach dem Oberbegriff des ersten Anspruchs.

### Stand der Technik

Solche Schaltungsanordnungen werden beispielsweise im Artikel "Efficient Snubbers for Voltage-Source GTO Inverters" von W. McMurray, IEEE Transactions on Power Electronics, Vol. PE-2, No. 3, July 1987 beschrieben. Es handelt sich dabei um Stromrichterschaltungsanordnungen mit mindestens zwei in Serie geschalteten GTOs, welche an eine Gleichspannungsquelle angeschlossen sind und mit dem gemeinsamen Knotenpunkt der Serieschaltung einen Lastanschluss bilden. Parallel zu den GTOs sind ausserdem sogenannte Antiparalleldioden vorgesehen, welche nach der Kommutierung den Stromfluss übernehmen. Um die GTOs beim Schalten vor allzu hohen Strom- und Spannungsflanken zu schützen, muss eine Beschaltung oder englisch "Snubber" vorgesehen werden. Diese umfasst nach dem Stand der Technik, wie er im erwähnten Artikel dargestellt ist, ein vergleichsweise aufwendiges Netzwerk von Induktivitäten, Kondensatoren, Widerständen und Dioden. Weitere Beschaltungsvarianten offenbart der Artikel "An Overview of Low-Loss Snubber Technology for Transistor Converters" von A. Ferraro, IEEE 1982, Seiten 466-467.

In den Europäischen Patentanmeldungen EP-A1-0 489 945 und der WO-93/09600 des gleichen Erfinders wird die sogenannte "harte Ansteuerung" eines GTO beschrieben, und es werden Schaltungsanordnungen für entsprechende Ansteuereinheiten angegeben. Im Hinblick auf diese beiden Europäischen Patentanmeldungen versteht man unter dem Begriff "harte Ansteuerung" die Ansteuerung des GTO mit einem Gatestrom, der so gestaltet ist, dass die Abschaltverstärkung IA/IGpeak deutlich kleiner ist als 3 und dass ein Anodenspannungsanstieg von mindestens 1 kV/µs resultiert. Im Rahmen der vorliegenden Erfindung ist diese harte Ansteuerung von Bedeutung und der Inhalt der oben genannten Europäischen Patentanmeldungen soll deshalb an dieser Stelle ausdrücklich aufgenommen werden.

### Darstellung der Erfindung

Aufgabe der vorliegenden Erfindung ist es, eine Stromrichterschaltungsanordnung mit GTOs anzugeben, welche mit möglichst wenig Beschaltungselementen auskommt und daher möglichst wenig Platz beansprucht und kostengünstig herzustellen ist.

Diese Aufgabe wird bei einer Schaltungsanordnung der eingangs genannten Art durch die Merkmale des ersten Anspruchs gelöst.

Kern der Erfindung ist es also, dass die GTOs hart angesteuert werden und dass die Spannungsanstiegsbegrenzungsmittel lediglich einen Kondensator umfassen, welcher parallel zu einer der Antiparalleldioden geschaltet ist. Es ist dabei nicht von Bedeutung, parallel zu welcher Antiparalleldiode der Kondensator geschaltet ist oder ob gar für jede Antiparalleldiode ein Kondensator vorgesehen wird.

Diese Art der Ansteuerung zusammen mit den erfindungsgemässen Spannungsanstiegsbegrenzungsmitteln erlaubt eine Vereinfachung der Stromanstieqsbeqrenzunqsmittel z.B. für die bekannten McMurray- und Undeland-Beschaltungen. Insbesondere kann auf eine Anzahl von Widerständen und Dioden verzichtet werden und die Werte der übrigbleibenden Kondensatoren und Induktivitäten können drastisch verkleinert werden.

Weitere Ausführungsbeispiele ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Das Schaltschema eines ersten Ausführungsbeispiels der Erfindung;
- **Fig. 2**: Das Schaltschema eines zweiten Ausführungsbeispiels der Erfindung;
- **Fig. 3**: Das Schaltbild eines weiteren Ausführungsbeispiels der Erfindung; und
- **Fig. 4**: Das Schaltbild einer Ausführungsform der Erfindung, welche mit niedrigstem Beschaltungsaufwand auskommt.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

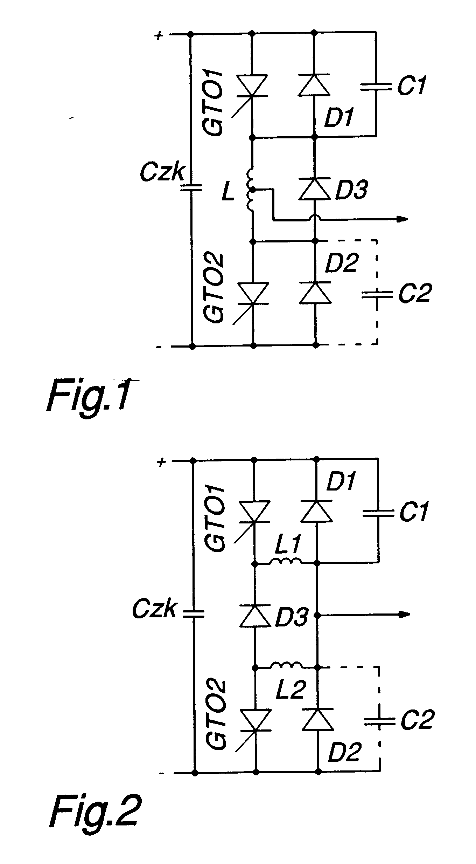

**Figur 1** zeigt ein Ersatzschaltbild einer ersten Ausführungsform der Erfindung. Nach der Erfindung werden die GTOs einer Schaltungsanordnung "hart" angesteuert. Als neue Belastungsgrenze treten dynamische, während des Abschaltvorganges auftretende Avalancheeffekte auf. Die zur Verfügung stehende Siliziumfläche des Halbleiterchips kann homogen genutzt werden. Durch die harte Ansteuerung kann der Einschaltvorgang derart beschleunigt werden, dass die Zerstörungsgrenze des GTO von derzeit 500 A/µs auf über 3000 A/µs erhöht werden kann. In Figur 1 ist ein Zweig mit einem ersten Abschaltthyristor GTO1 und mit einem zweiten GT02 sowie antiparallel dazu angeordneten Dioden D1 und D2 dargestellt. Der Zweig ist an die Plus- und Minusanschlüsse einer Gleichspannungsquelle - dargestellt durch den Zwischenkreiskondensator Czk - angeschlossen. Nach bekannter Weise - siehe die eingangs genannten Druckschriften - werden die GTOs nun abwechselnd so von einer nicht dargestellten Ansteuereinheit angesteuert, dass am Lastanschluss eine Wechselspannung erzeugt wird. Selbstverständlich können mehrere gleichartig aufgebaute Zweige vorgesehen werden, mit welchen ein mehrphasiges Wechselspannungssystem aufgebaut werden kann. Der Übersichtlichkeit halber ist in den Figuren jedoch jeweils nur ein Zweig dargestellt.

Die Spannungsanstiegsbegrenzungsmittel umfassen nach der in Figur 1 dargestellten Ausführungsform pro Zweig lediglich einen Kondensator C1 oder C2, welcher parallel zu einer der antiparallel zum entsprechenden GTO liegenden Antiparalleldiode D1 bzw. D2 liegt. Der Kondensator C1 oder C2 kann entweder dem einen (GTO1) oder dem anderen (GT02) Thyristor zugeordnet sein. Es ist aber auch möglich, für jeden Thyristor, d.h. parallel zu jeder Antiparalleldiode einen Kondensator vorzusehen.

Verglichen mit der bekannten McMurray Beschaltung entfallen also die zwischen Antiparalleldiode und den Kondensatoren geschalteten, sogenannten Snubberdioden und der Freilaufwiderstand. Damit umfassen die Stromanstiegsbegrenzungsmittel nunmehr lediglich eine Induktivität L zwischen den beiden GTOs eines Zweiges und eine parallel dazu liegende Diode D3. Der Lastanschluss des Zweiges kann entweder durch einen Mittelabgriff der Spule der Induktivität L oder durch den gemeinsamen Knotenpunkt zweier einzelner in Serie geschalteter Spulen gebildet werden.

Es liegt im Rahmen der Erfindung, pro Zweig entweder nur einen Kondensator oder aber für jeden Thyristor einen Kondensator vorzusehen. Im Falle von nur einem Kondensator sollte dessen Kapazität der Summe der einzelnen Kondensatoren entsprechen.

Durch die Erfindung wird auch der mechanische Aufbau vereinfacht, denn es werden nur 7 bis 8 Kühlkörper anstelle von deren 10 pro Schaltung benötigt. Aber auch die Werte der übrigbleibenden Beschaltungselemente können reduziert werden. Für eine Zwischenkreisspannung von 3kV werden für die Kondensatoren C1 und C2 lediglich noch Werte von 0.5 µF bzw. 1 µF für nur einen Kondensator anstatt von 3 µF und für die Induktivität 2 µH anstatt von 10 µH benötigt. Als Dimensionierungsvorschrift kann gesagt werden, dass das Verhältnis eines maximalen Abschaltstromes Imax, für welchen die Schaltungsanordnung ausgelegt ist, zur Summe des oder der Kapazitäten der Kondensatoren grösser gleich als 2 kV pro µs betragen soll. Für die Berechnung der Induktivität oder Induktivitäten gilt die Regel, dass das Verhältnis der Zwischenkreisspannung zur Summe der Induktivitäten grösser gleich 1 kA pro µs gewählt werden soll.

In **Figur 2** ist eine Variante der Schaltung nach Figur 1 dargestellt. Hierbei sind die Induktivitäten L1 und L2 der Stromanstiegsbegrenzungsmittel zwischen den Antiparalleldioden D1 bzw. D2 und den entsprechenden GTOs angeordnet. Die Diode D3 liegt zwischen den beiden GTOs, und der Lastanschluss wird durch eine Verbindung der beiden Antiparalleldioden D1 und D2 gebildet. In dieser Schaltungsanordnung können GTOs verwendet werden, deren Anoden-Kathoden-Spannung bei Rückwärtsbelastung auf ca. 20 bis 100 V begrenzt ist. Auf diese Weise werden Überspannungen an den abschaltenden GTO-Elementen durch Ableitung in den speisenden Stromkreis begrenzt. Demzufolge können herkömmliche GTOs mit Anodenshorts für diesen Schaltungstyp eingesetzt werden.

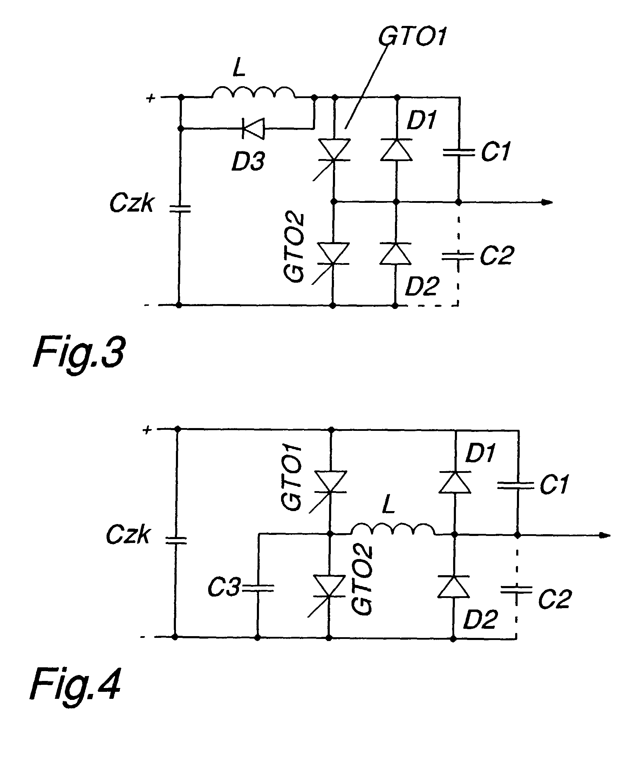

In **Figur 3** ist eine Ausführungsform der Erfindung dargestellt, welche von der sogenannten Undeland-Beschaltung abgeleitet ist. Wiederum ist den Halbleiterschaltern GTO1 und GT02 eines Zweiges je eine Antiparalleldiode D1 bzw. D2 parallel geschaltet. Die Spannungsanstiegsbegrenzungsmittel umfassen pro Zweig mindestens einen Kondensator C1 oder C2, welcher direkt parallel zu der jeweiligen Antiparalleldiode liegt. Auch hier können wahlweise nur einer oder für jeden Thyristor ein Kondensator vorgesehen werden. Im Gegensatz zu den Ausführungsformen nach den Figuren 1 und 2 sind die Stromanstiegsbegrenzungsmittel nicht zwischen den GTOs angeordnet, sondern sie sind dem positiven oder dem negativen Pol der Gleichspannungsquelle zugewandt. Im Beispiel nach Figur 3 sind die Mittel dem positiven Pol zugewandt und umfassen eine Induktivität L mit einer dazu parallel liegenden Diode D3.

**Figur 4** schliesslich zeigt noch eine Ausführungsform, welche mit niedrigstem Schaltungsaufwand auskommt: Bei Verwendung von GTOs mit Rückwärts-Avalancheverhalten (z.B. aufgrund von Anodenshorts oder einer integrierten Avalanchezone) kann eine Schaltung aufgebaut werden, bei der sowohl die Halbleiterschalter GTO1 und GT02 als auch die zugeordneten Antiparalleldioden D1 und D2 pro Zweig in Serie zwischen dem positiven und negativen Pol der Gleichspannungsquelle liegen. Die Stromanstiegsbegrenzung wird durch eine Induktivität L, welche im Zweig zwischen den GTOs und den Dioden liegt, bewirkt. Die Spannungsanstiegsbegrenzungsmittel umfassen mindestens einen Kondensator C2, welcher wahlweise parallel zu einer der Antiparalleldioden D1 oder D2 geschaltet werden kann. Besonders bevorzugt wird eine Anordnung mit einem zusätzlichen Kondensator C3 parallel zu einem der GTOs. Auch hier kann nur ein Kondensator oder parallel zu jeder Antiparalleldiode ein Kondensator vorgesehen werden.

Bei allen angegeben Schaltungstypen kann die Antiparalleldiode durch eine Serieschaltung von Dioden halber Leistungsfähigkeit ersetzt werden. Bei einer Zwischenkreisspannung von 3 kV werden entweder eine 4.5 kV Antiparalleldiode pro Halbleiterschalter oder zwei 2.5 kV Dioden benötigt. Die Diode D3 weist vorzugsweise eine hohe Durchlassspannung auf. Dadurch erreicht man eine Reduktion der Freilaufzeit und vermindert den Einfluss der Reverse Recovery. Damit wird die gesamte Schaltungsanordnung resistenter gegenüber Ausfällen durch Reverse Recovery. Ein solche Diode erhält man beispielsweise durch Bestrahlung mit einer höheren Elektronendosis als bei konventionellen Dioden.

Insgesamt stehen also mit der Erfindung die benötigten Voraussetzungen zur Verfügung, mit welchen Schaltungsanordnungen mit geringem Beschaltungsaufwand gebaut werden können. Die Anzahl der Zweige kann dabei beliebig gewählt werden. Ebenso kann zur Erhöhung der Spannungsfestigkeit eine Serieschaltung von Halbleiterschaltern vorgesehen sein.

### Bezeichnungsliste

- GTO1, GTO2: Halbleiterschalter, Abschaltthyristoren
- C1, C2, C3: Kondensatoren
- Czk: Zwischenkreiskondensator (-batterie)
- D1, D2, D3: Dioden
- L, L1, L2: Induktivitäten
- +, -: Anschlüsse der Gleichspannungsquelle

## Patentansprüche

1. Stromrichterschaltungsanordnung mit mindestens einem Zweig mit einer geraden Anzahl von abschaltbaren Thyristoren (GTO1, GT02) und mit Antiparalleldioden (D1, D2), welche antiparallel zu den Thyristoren (GTO1, GTO2) geschaltet sind, wobei der oder jeder Zweig an eine Gleichspannungsquelle angeschlossen ist und ein mittlerer, gemeinsamer Knotenpunkt des oder jedes Zweiges einen Lastanschluss bildet, sowie mit Strom- und Spannungsanstiegsbegrenzungsmitteln (L, D3 und C1, C2) welche die abschaltbaren Thyristoren (GTO1, GTO2) vor zu hohen Strom- und Spannungsanstiegsflanken schützen, dadurch gekennzeichnet, dass die abschaltbaren Thyristoren (GTO1, GTO2) hart angesteuert werden und dass die Spannungsanstiegsbegrenzungsmittel pro Zweig lediglich mindestens einen Kondensator (C1 oder C2) umfassen, welcher parallel zu einer der Antiparalleldioden (D1 oder D2) des jeweiligen Thyristors (GTO1 oder GT02) angeordnet ist.

2. Schaltungsanordnung nach Anspruch 1, dadurch gekennzeichnet, dass die Stromanstiegsbegrenzungsmittel (L, D3) eine Parallelschaltung mit nur einer Induktivität (L) und nur einer Strombegrenzungsdiode (D3) umfassen, wobei die Parallelschaltung zwischen die Thyristoren (GTO1, GTO2) eines oder jedes Zweiges eingebunden ist und ein Mittelabgriff der Induktivität (L) den Lastanschluss bildet.

3. Schaltungsanordnung nach Anspruch 2, dadurch gekennzeichnet, dass die Induktivität (L) zwei getrennte in Serie geschaltete Spulen (L1, L2) umfasst und der Lastanschluss in der Mitte der beiden Spulen angeordnet ist.

4. Schaltungsanordnung nach Anspruch 1, dadurch gekennzeichnet, dass die Stromanstiegsbegrenzungsmittel (L, D3) zwischen dem Pluspol oder dem Minuspol der Gleichspannungsquelle und dem oder jedem Zweig angeordnet sind und eine Parallelschaltung nur einer Induktivität (L) und nur einer Strombegrenzungsdiode (D3) umfassen.

5. Schaltungsanordnung nach Anspruch 1, dadurch gekennzeichnet, dass die Stromanstiegsbegrenzungsmittel zum einen zwei Induktivitäten (Ll, L2) umfassen, welche je zwischen den Thyristoren (GTO1 bzw. GTO2) und den dazugehörigen Antiparalleldioden (Dl, D2) eines Zweiges angeordnet sind, und zum anderen eine Diode (D3) umfassen, welche zwischen den Thyristoren (GTO1, GTO2) eines Zweiges angeordnet ist, und dass der Lastanschluss durch eine Verbindung der Antiparalleldioden (D1, D2) und der zwischen den Antiparalleldioden (D1, D2) und den Thyristoren (GTO1, GTO2) liegenden Induktivitäten (L1, L2) gebildet wird.

6. Schaltungsanordnung nach Anspruch 1, dadurch gekennzeichnet, dass die Thyristoren (GTO1, GTO2) rückwärtsleitend sind, vorzugsweise mit einer Avalanchespannung von 20 bis 100 V, und dass die Stromanstiegsbegrenzungsmittel eine Induktivität (L) umfassen, welche zwischen den Thyristoren (GTO1, GTO2) und den Antiparalleldioden (D1, D2) eines Zweiges angeordnet ist.

7. Schaltungsanordnung nach einem der Ansprüche 1 bis 6, dadurch gekennzeichnet, dass für mehr als nur für einen Thyristor (GTO1 oder GTO2) parallel zu der entsprechenden Antiparalleldioden (Dl, D2) ein Kondensator (C1, C2) vorgesehen ist.

8. Schaltungsanordnung nach Anspruch 6, dadurch gekennzeichnet, dass parallel zu einer Hälfte (GTO1 oder GTO2) der Thyristoren ein weiterer Kondensator (C3) vorgesehen ist.

9. Schaltungsanordnung nach einem der Ansprüche 1 bis 8, dadurch gekennzeichnet, dass die Kapazität des Kondensators (C1 oder C2) oder die Summe der Kapazitäten der Kondensatoren (C1 und C2) des Spannungsanstiegsbegrenzungsmittel so gewählt wird, dass das Verhältnis eine maximalen Abschaltstromes, für welchen die Schaltungsanordnung ausgelegt ist, zur Kapazität oder Summe der Kapazitäten grösser gleich 2 kV pro µs beträgt und dass die Induktivität der Stromanstiegsbegrenzungsmittel so gewählt wird, dass ein Verhältnis der Zwischenkreisspannung zur Induktivität grösser gleich 1 kA pro µs beträgt.
